# EUROPEAN PATENT SPECIFICATION

(11) **EP 1 329 646 B1**
(45) Date of publication and mention of the grant of the patent: **29.03.2006**
(21) Application number: 02290133.4
(22) Date of filing: 18.01.2002
(51) Int. Cl.: F16G 11/00, B62J 7/08

(54) **Rope lock device and luggage tie**
Seilklemme und Gepäckhaltevorrichtung
Dispositif de blocage de corde et maintien de bagage

(43) Date of publication of application: 23.07.2003
(73) Proprietor: YKK France Sarl, 93240 Stains (FR)
(72) Inventor: Murata, Koji, 59471 Seclin Cedex, Lille (FR)
(74) Representative: Casalonga, Axel

(56) References cited:
- FR-A- 2 427 508
- GB-A- 2 279 249
- US-A- 3 087 216
- US-A- 4 340 998
- US-A- 5 671 509
- US-A- 6 012 204

## Description

The present invention relates to a rope lock device for locking a rope at a desired position and to a luggage tie or belt comprising the rope lock device for fixing a piece of luggage to a luggage carrier. The rope lock device and the luggage tie find use, for example as bicycle accessories for fixing luggage to the luggage carrier of a bicycle.

Many types of rope lock devices are in use today throughout the recreational and commercial industries. Many of the prior art rope lock devices achieve a pinching of the rope creating an opposite force to a direction of pull of the rope.

A first type of rope lock devices requires the assembling of various parts that together act through mutual movement to achieve the desired pinching of the rope. Locking a rope to such devices often requires a user to use both hands, viz. one hand to approach the rope to the rope lock device that is held in the other hand, and the other hand to hold the rope lock device, to manipulate with the fingers of said other hand the mutually movable parts of the device to achieve the pinching.

A second type of rope lock devices is comprised solely of a single unit piece having no moving parts. For example, the rope lock disclosed in US 5,671,509 comprises a one-piece unit having a central bore and a groove portion that co-operate with each other to frictionaly engage and secure a rope in a desired position. The groove portion is provided in the substantially cylindrical wall of the central bore and has a width that monotonously decreases when going from an open end of the groove to a closed end of the groove for clamping the rope end.

This prior art rope lock has the following disadvantages. A perpendicularly extending excess end portion of the rope does not look neatly. A long extending excess end portion might accidentally form a loop, which gives rise to the danger that objects may entangle in the loop without intention. When an object that is entangled in an extending excess end moves, or when the excess end is unintentionally drawn in the axial direction, the pinched portion of the rope might be moved in the groove in the direction of increasing width so that the rope is eventually released. Furthermore, when a strong pull is applied to the fixed rope, the edges of the groove exert a locally very strong pressure on the outer surface of the rope, which might eventually lead to localised damage of the outer surface of the rope.

Also known by US-A-6,012,204 is a fitting for attachment to a rope, comprising a central bore receiving the rope in a first direction and a tapered notch for clamping the rope bent in a second direction. A rope holding structure is also provided for holding the rope in a further bent third direction.

However, the rope is not securely held in said holding structure so that the rope can easily escape.

The present invention overcomes the shortcomings mentioned above.

It is an objective of the present invention to provide a rope lock that is capable of securely and reliably locking a rope. It is a further objective that the drawbacks of the extending excess end of the rope are cancelled, in particular the danger of unintentionally forming of a loop. It is a still further objective to reduce or avoid the risk that a locked rope is unintentionally released from the rope lock. It is a still further objective to provide ease and comfort of use by allowing manipulation of the excess end of the rope with only one hand of a user, in a single simple movement.

As claimed a rope lock device for fastening a rope comprises a central bore adapted to slidably receive the rope in a first direction, clamping means comprising a groove portion of decreasing width for clamping the rope bent in a second direction, and fixing means for releasably fixing the rope in a further bent third direction making an angle of more than 90° with the first direction. The fixing means comprise an open passage adapted to receive the rope bent in the third direction at least partly delimited by two lateral wings separated by a gap having a' width that is smaller than the diameter of the rope. According to the invention, at least at one location of the open passage, the diameter of the open passage is smaller than the diameter of the rope. Furthermore, the diameter of the open passage is monotonously varying, so that when the rope is inserted in the open passage, the rope is pinched.

The third direction may lie in a plane that is substantially parallel to the plane spanned by the first direction and the second direction, for example in the same plane. Preferably, the third direction makes an angle with the first direction, of approximately 180°.

Advantageously, the rope lock device further comprises attachment means for connecting the device to an object. The attachment means may be a hook.

Preferably, the groove portion of the clamping means is in communication with the central bore.

Preferably, said lateral wings are resilient to facilitate introduction of the rope in said passage.

Advantageously, the rope lock device is integrally made in one piece, preferably moulded from a synthetic material.

The invention also relates to a luggage tie for fixing a piece of luggage to a luggage carrier comprising a rope and at least one rope lock device according to the invention, the rope lock device being fixed near an end of said rope.

The luggage tie may further comprise at least one rope and a stopper fixedly connected at the end of the rope.

In a preferred embodiment, the luggage tie may comprise clipping means that are adapted to be releasably clipped on another part of said rope.

Preferably, the clipping means may comprise in such a case, two clip wings and a blind bore adapted to receive and secure the rope end. Said two clip wings are adapted to embrace another part of the rope in such a way that the rope is fixedly and releasably pinched.

Alternatively, the clipping means may comprise a clip arm and a blind bore adapted to receive and secure the rope end, said clip arm being adapted for embracing another part of the rope in such a way that the rope is fixedly and releasably pinched.

The luggage tie may also comprise at least two similar ropes connected to each other.

Preferably, the rope is an elastic rope. The diameter of the rope decreases as the rope is pulled to lengthen against an elastic force exerted by the rope.

The invention will be better understood and further advantages will become apparent upon studying the detailed description of some embodiments of the invention taken as non-limiting examples with reference to the enclosed Figures, in which:
Figure 1 is a sectional view of an embodiment of the rope lock device according to the invention, showing the bending of the rope from a first to the second and third direction;
Figure 2 is a perspective view on the embodiment of the rope lock device shown in Figure 1, when viewing the device from the lefthand side in Figure 1;
Figure 3 is a side view of an embodiment of an end stop;
Figure 4 is a sectional view of a first embodiment of the end stop of Figure 3 in the sectional plane IV-IV of Figure 3;
Figure 5 is a sectional view similar to Figure 4 of a second embodiment of the end stop of Figure 3; and
Figure 6 is a schematic perspective view of an embodiment of a luggage tie comprising a rope lock device according to the invention.

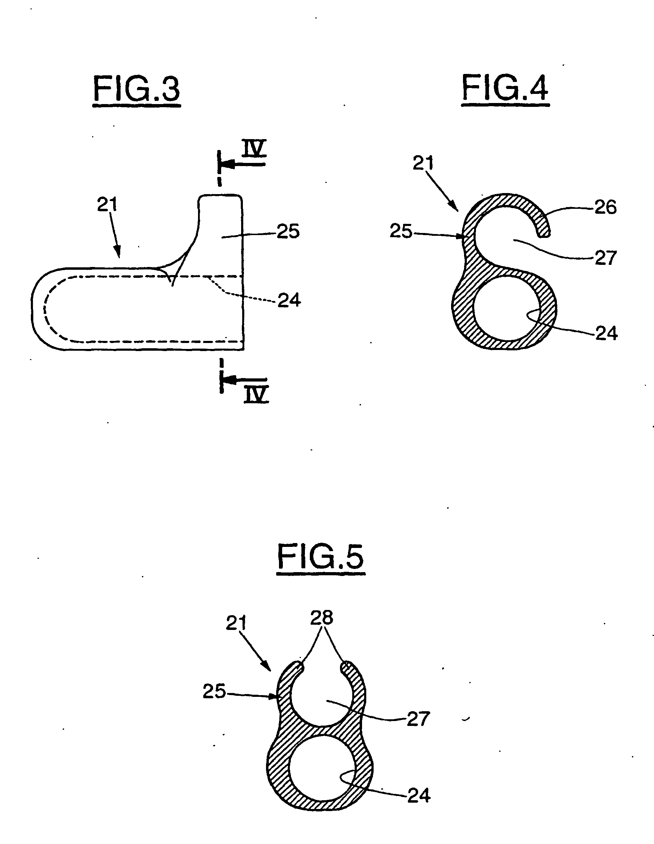

The embodiments shown in Figures 3, 4 and 5 do not form part of the invention.

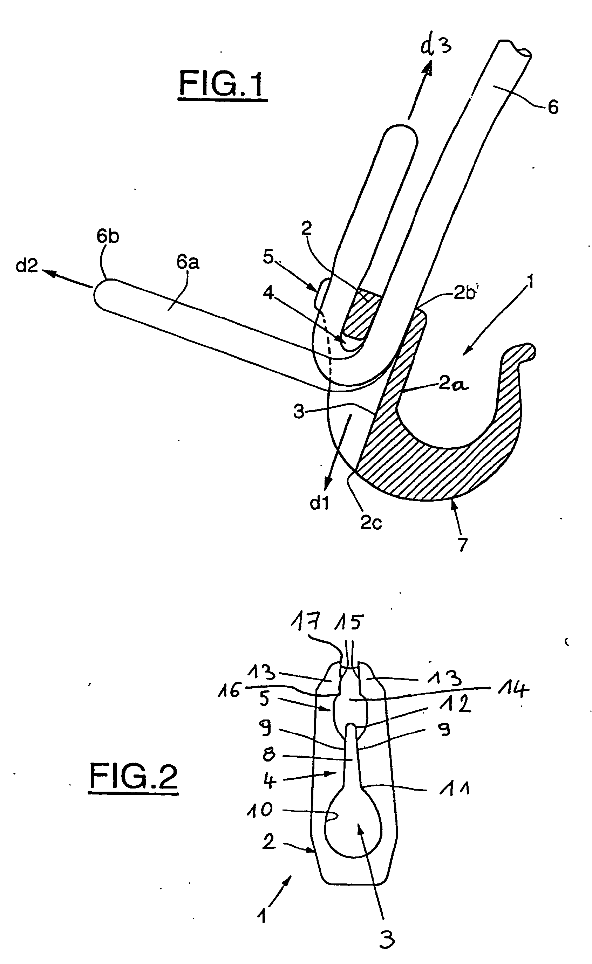

As is best shown on Figures 1 and 2, a rope lock device 1 comprises a main body 2 having a central bore 3 with clamping means 4 for clamping a rope 6 to the rope lock device 1. A fixing means 5, which is adapted to securely fix a free excess end 6a of the rope 6, is integral with the main body 2. Further connected to the main body 2 is an attachment means 7, which is adapted to attach the rope lock device 1 to an object. In the embodiment shown, the attachment means 7 is a C-shaped hook, which is integrally connected to a first side 2a of the main body 2.

The central bore 3 extends through the main body 2 in a first direction d1. The central bore is adapted to slidably receive the rope 6. The central bore 3 has a substantially cylindrical inner wall. The inner diameter of the central bore 3 is generally larger than a diameter of the rope 6. In the embodiment shown in Figure 1, the diameter of thecentral bore 3 increases slightly from a first diameter near the upper end 2b to a second diameter near the lower end 2c of the main body 2.

A user can thus easily insert an end 6b of the rope in the central bore 3 and push the rope through the central bore 3. until an the rope 6 has a desired length.

In the embodiment shown in Figure 1, the clamping means 4 provided in the main body 2 comprises an integral groove 8 formed in a portion of the central cylindrical wall 10 of the bore 3. As is best shown in the Figure 2, the integral groove 8 is bordered by flanges 9 formed by edge portions of the cylindrical wall 10. The groove 8 is elongated in the cylindrical wall 10 substantially parallel to the central bore 3 and extends from an open lower end 11 to a closed upper end 12 of the groove. The groove 8 has a monotonously varying width, which decreases from a first width near the lower end 11 of the groove 8 to a second width near the bottom end 12. The groove 8 is in communication with an opening of the central bore 3 at the lower end 2c of the main body 2. In other words, the groove 8 represents an extension of the opening of the central bore 3 at the lower end 2c of the main body 2.

The fixing means 5 is located on the main body 2 near the upper end 2b. The fixing means may comprise two opposite lateral wings 13 that partially embrace a second bore or open passage 14. A gap 15 is defined between the lateral wings 13. The gap 15 has a width, which is generally substantially smaller than the diameter of the rope 6. In the embodiment shown in Figure 2, the width of the gap 15 decreases slightly from the inner edge 16 to the outer edge 17 of the gap 15. The lateral wings 13, in the example shown, are resilient to facilitate introducing the rope 6 in the open passage 14. In other embodiments, this is not necessary.

The diameter, of the open passage or second bore 14 is monotonously varying, for example decreasing, when going in the direction toward the upper end 2b of the main body 2. At least at one location of the open passage 14, preferably near or at the upper end 2b, the diameter of the open passage 14 is smaller than the diameter of the rope 6. Thus when the rope is inserted in the open passage 14, the rope 6 is pinched, preferably near the upper end 2b. As a consequence, the pinched rope 6 is fixed in the fixing means 5, i.e. the rope 6 will not move or slip along, and is securely kept in the axial direction of the second bore 14. The absolute value and the ratio, respectively, of the diameter of the second bore 14 and the diameter of the rope 6 can easily be selected as a function of the diameter and the elasticity and radial compressibility of the rope 6.

In operation, an end portion 6a of the rope 6 is inserted in an axial first direction d1 into the central bore 3 and further pushed or pulled passed the central bore 3 until the rope 6 has reached a desired length. The end portion 6a of the rope 6 is then bent away from the first direction d1 in a second direction d2, which is substantially perpendicular to the first direction d1, as indicated by the phantom representation in Figure 1. In addition to being bent, the end portion 6a of the rope 6 is also pulled by a user in the second direction d2. As a consequence, since the integral groove 8 is in communication with the central bore 3, a portion of the rope 6 is pulled between the flanges 9 of the groove 8. Since the width of the groove 8 decreases, the rope moving in the groove starts to be pinched. The stronger the pull on the end portion 6a of the rope 6, the further the rope slides in the groove 8 and the stronger the rope is pinched and thus clamped in the groove 8 between the flanges 9. This can also be achieved when the end portion 6a of the rope 6 is pulled under an angle even smaller than 90°.

The rope is then further bent away from the second direction d2 and simultaneously pulled into a third direction d3, i.e. until the end portion 6a of the rope 6 is in the direction d3, which is substantially parallel and opposite to the first direction d1, as illustrated on Figure 1. When bending the end portion 6a of the rope into the third direction d3, the user aims to introduce the end portion of the rope in the gap 15 between the lateral wings 13 of the fixing means 5.

If the lateral wings 13 are resilient, they slightly open so that the width of the gap 15 increases until the rope 6 passes the lateral wings 13 and is received in the open passage 14. The resilient lateral wings 13 then embrace the rope and, since the diameter of the rope is greater than the diameter of the open passage 14, the rope is pinched by the resilient lateral wings 13.

Alternatively, the rope may be an elastic rope, such that when the elastic rope is pulled in a longitudinal direction, the elastic rope elongates against an elastic force exerted by the rope and at the same time the diameter of the elastic rope decreases. The longitudinal pull on the elastic rope may be increased to an extent that the diameter of the elastic rope decreases below the width of the gap 15. Then, the elastic rope may be inserted in the open passage 14.

The fixing of the rope in the fixing means may also result from a combination of pinching by resilient wings and pinching of an elastic rope, depending on the type of rope, the particular structural design of the resilient wings and the open passage.

While the clamping means 4 has been described to have a substantially smooth central bore 3 co-operating with the groove 8, it must be understood that other types of clamping means could be used, for example comprising a passage of diminishing width provided with a plurality of substantially parallel ribs tilted with respect to the axial direction, capable of pinching the rope.

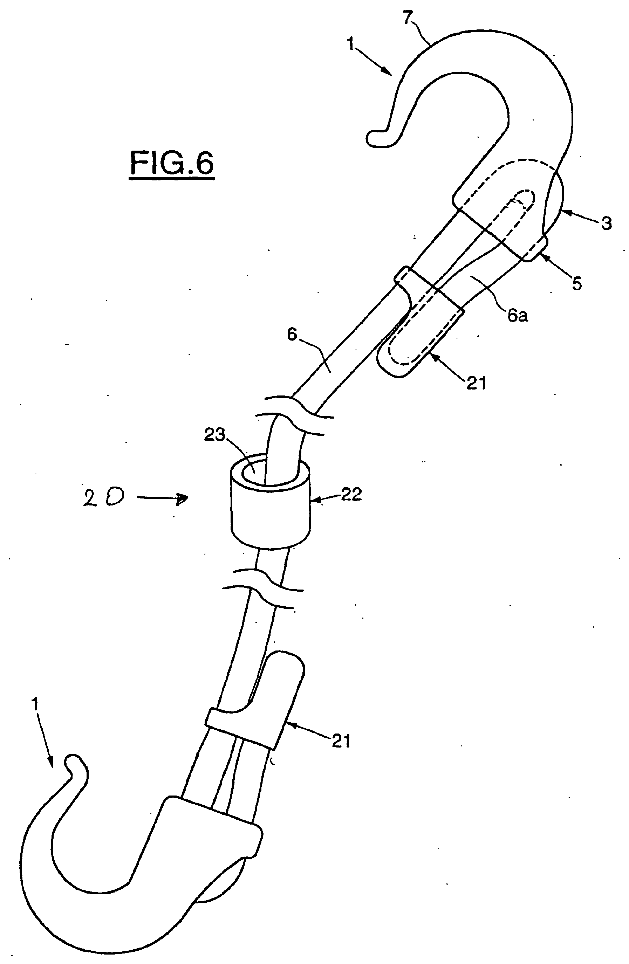

The rope lock device according to the invention may be used as an element of a luggage tie 20 as shown by way of example in Figure 6. The luggage tie 20 comprises a rope 6 and two rope lock devices 1 as described above each secured to the rope 6 near an end portion 6a of the rope. A rope end stopper 21 is secured to each end portion 6a of the rope. A rope connector 22 is also secured in this example to the rope 6 and adapted to receive a second rope substantially identical to rope 6. To this end the rope connector 22 comprises a bore 23 that receives the rope 6 and may further receive a second rope.

The rope end stopper 21 serves to releasably connect the end portion 6a of the rope 6 to another part of said rope 6. As shown in Figures 3 to 5, the rope end stopper 21 may comprise a blind bore 24 that is adapted to receive, and be fixedly connected with, an end of the rope. The tip end 6b of the rope may be secured in the blind bore 24 by any suitable means. The end portion 6a of the rope may also simply be secured to the rope end stopper 21 by pinching within the blind bore 24.

The rope end stopper 21 further comprises clipping means 25 that are adapted to be releasably clipped to another part of the rope.

Figure 4 illustrates a first embodiment of a rope end stopper 21, in which the clipping means 25 comprises a resilient clip arm 26 that embraces a portion of a substantially cylindrical clip bore 27 adapted to receive a portion of the rope. A distal end of the clip arm 26 is spaced away from an opposing portion of the outer surface of a substantially cylindrical wall around the blind bore 24 leaving a gap smaller than the diameter of the rope.

In operation, the rope pressed in said gap resiliently pushes away the clip arm 26 and is finally received in the clip bore 27.

Figure 5 illustrates a second embodiment of a rope end stopper 21, in which the clipping means 25 comprises two resilient clip wings 28 that embrace a portion of a substantially cylindrical clip bore 27 adapted to receive a portion of the rope. The distal ends of the two clip wings 28 are mutually spaced by a gap smaller than the diameter of the rope.

In operation, when the rope is pressed in the opening between the distal ends of the clip wings 28, due to the resiliency, the distal end of the clip wings 28 are pushed apart, such that the rope slips passed the distal ends of the clip wings 28 and is received in the clip bore 27.

In both the embodiments of Figure 4 and Figure 5, the diameter of the clip bore 27 may be greater than the diameter of the rope, in which case the rope is slidably received within the clip bore 27. Alternatively, the diameter of the clip bore 27 may be slightly smaller than the diameter of the rope, in which case the rope is received in the clip bore 27 and pinched therein.

When the rope lock device 1 is adapted such that the third direction d3 is opposite to the first direction d1 of the rope as shown in Figure 6, the end portion 6a of the rope may be arranged to be substantially parallel to the rope 6, and releasably clipped to another part of the rope.

When the end of the rope is clipped to another part of the rope using the rope end stopper, the end of the rope is not dangling and the luggage tie used accordingly looks neatly. Further, the risk that the dangling end of the rope unintentionally entangles an object is reduced.

When the length of the rope end portion 6a is reasonably short, it will be close to the rope along the length of the rope end, so that the forming of a loop, which might unintentionally entangle an object, is reduced or avoided.

Each of the rope lock device 1, the rope end stop 21 and the rope connector 22 may be made from a synthetic material, preferably in one single piece, for example by a moulding technique. Manufacturing can be simple and manufacturing costs can thus be kept low.

## Claims

1. A rope lock device (1) for fastening a rope (6) comprising a central bore (3) adapted to slidably receive the rope (6) in a first direction (d1), clamping means (4) comprising a groove portion (8) of decreasing width for clamping the rope bent in a second direction (d2), and fixing means (5) for releasably fixing the rope in a further bent third direction (d3) making an angle of more than 90° with the first direction (d1), the fixing means (5) comprising an open passage (14) adapted to receive the rope (6) bent in the third direction (d3) at least partly delimited by two lateral wings (13) separated by a gap (15) having a width that is smaller than the diameter of the rope, **characterized in that** at least at one location of the open passage (14) the diameter of the open passage (14) is smaller than the diameter of the rope and **in that** the diameter of the open passage (14) is monotonously varying, so that when the rope is inserted in the open passage (14), the rope is pinched.

2. The device according to claim 1, **characterized in that** the third direction (d3) makes, with the first direction (d1), an angle of approximately 180°.

3. The device according to any one of the preceding claims, **characterized in that** the device further comprises attachment means (7) for connecting the device to an object.

4. The device according to claim 3, **characterized in that** the attachment means (7) is a hook;

5. The device according to any one of claim 1 to 4, **characterized in that** said lateral wings (13) are resilient to facilitate introduction of the rope (6) in said passage (14).

6. The device according to any one of the preceding claims, **characterized in that** it is integrally made in one piece, preferably molded in a synthetic material.

7. A luggage tie (20) for fixing a piece of luggage to a luggage carrier comprising a rope (6) and at least one rope lock device (1) according to anyone of the preceding claims, the rope lock device (1) being fixed near an end portion (6a) of said rope.

8. The luggage tie according to claim 7, **characterized in that** it further comprises at least one rope end stopper (21) fixedly connected at the end portion (6a) of the rope (6) and comprising clipping means (25) that are adapted to be releasably clipped on another part of said rope (6).

9. The luggage tie according to claim 8, **characterized in that** the clipping means (25) comprise two clip wings (28) and a blind bore (24) adapted to receive and secure the rope end portion (6a), said two clip wings (28) being adapted to embrace another part of the rope (6) in such a way that the rope is fixedly and releasably pinched.

10. The luggage tie according to claim 8, **characterized in that** the clipping means (25) comprise a clip arm (26) and a blind bore (24) adapted to receive and secure the rope end portion (6a), said clip arm (26) being adapted for embracing another part of the rope (6) in such a way that the rope is fixedly and releasably pinched.

11. The luggage tie according to any one of claim 7 to 10, **characterized in that** it comprises at least two similar ropes connected to each other.

12. The luggage tie according to any one of claim 7 to 11, **characterized in that** said rope (6) is an elastic rope, the diameter of which decreases as the rope is pulled to lengthen against an elastic force exerted by the rope.

## Revendications

1. Dispositif de blocage de corde (1) pour fixer une corde (6) comprenant un trou central (3) adapté pour recevoir à coulissement la corde (6) dans une première direction (d1), un moyen de pincement (4) comprenant une partie rainure (8) de largeur décroissante pour pincer la corde courbée dans une deuxième direction (d2), et un moyen de fixation (5) pour fixer de manière détachable la corde dans une troisième direction plus courbée (d3) qui fait un angle de plus de 90° par rapport à la première direction (d1), le moyen de fixation (5) comprenant un passage ouvert (14) adapté pour recevoir la corde (6) courbée dans la troisième direction (d3) au moins partiellement délimité par deux pattes latérales (13) séparées par un espace (15) ayant une largeur qui est plus petite que le diamètre de la corde, **caractérisé en ce que**, au moins en un endroit du passage ouvert (14), le diamètre du passage ouvert (14) est plus petit que le diamètre de la corde et **en ce que** le diamètre du passage ouvert (14) varie de façon monotone, de sorte que lorsque la corde est insérée dans le passage ouvert (14), la corde est coincée.

2. Dispositif selon la revendication 1, **caractérisé en ce que** la troisième direction (d3) forme, avec la première direction (d1), un angle d'environ 180°.

3. Dispositif selon l'une quelconque des revendications précédentes, **caractérisé en ce que** le dispositif comprend en outre un moyen de fixation (7) pour connecter le dispositif à un objet.

4. Dispositif selon la revendication 3, **caractérisé en ce que** le moyen de fixation (7) est un crochet.

5. Dispositif selon l'une quelconque des revendications 1 à 4, **caractérisé en ce que** lesdites pattes latérales (13) sont résilientes pour faciliter l'introduction de la corde (6) dans ledit passage (14).

6. Dispositif selon l'une quelconque des revendications précédentes, **caractérisé en ce qu'**il est fait d'un seul tenant, de préférence moulé en matériau synthétique.

7. Lien de bagage (20) pour fixer un bagage sur un support de bagage comprenant une corde (6) et au moins un dispositif de blocage de corde (1) conforme à l'une quelconque des revendications précédentes, le dispositif de blocage de corde (1) étant fixé près d'une partie d'extrémité (6a) de ladite corde.

8. Lien de bagage selon la revendication 7, **caractérisé en ce qu'**il comprend en outre au moins un élément d'arrêt (21) d'extrémité de corde connecté de manière fixe à la partie d'extrémité (6a) de la corde (6) et comprenant des moyens d'attache (25) qui sont adaptés pour être fixés par pression de manière détachable sur une autre partie de ladite corde (6).

9. Lien de bagage selon la revendication 8, **caractérisé en ce que** les moyens d'attache (25) comprennent deux ailes de pince (28) et un trou borgne (24) adapté pour recevoir et fixer la partie d'extrémité de corde (6a), lesdites deux ailes d'attache (28) étant adaptées pour embrasser une autre partie de la corde (6) de telle manière que la corde soit coincée de manière fixe et détachable.

10. Lien de bagage selon la revendication 8, **caractérisé en ce que** les moyens d'attache (25) comprennent un bras d'attache (26) et un trou borgne (24) adapté pour recevoir et fixer la partie d'extrémité de corde (6a), ledit bras d'attache (26) étant adapté pour embrasser une autre partie de la corde (6) de telle manière que la corde soit coincée de manière fixe et détachable.

11. Lien de bagage selon la revendication 7 à 10, **caractérisé en ce qu'**il comprend au moins deux cordes similaires connectées l'une à l'autre.

12. Lien de bagage selon la revendication 7 à 11, **caractérisé en ce que** ladite corde (6) est une corde élastique, dont le diamètre diminue à mesure que la corde est tirée pour s'allonger contre une force élastique exercée par la corde.

## Patentansprüche

1. Seilbefestigungseinrichtung (1) zur Befestigung eines Seils (6), zu der gehören: eine zentralen Bohrung (3), die dazu eingerichtet ist, das Seil (6) gleitend in einer Richtung (d1) aufzunehmen, Klemmmittel (4), die einen Nutbereich (8) mit abnehmender Weite zum Einklemmen des Seils enthalten, das in einer zweiten Richtung (d2) gebogen ist, und Fixiermittel (5) zum lösbaren Fixieren des Seils, das in eine dritte Richtung (d3) weiter gebogen ist, die mit der ersten Richtung (d1) einen Winkel von mehr als 90° einschließt, wobei die Fixiermittel (5) einen ersten offenen Durchlass (14) enthalten, der dazu eingerichtet ist, das in der dritten Richtung (d3) gebogene Seil aufzunehmen und der zumindest teilweise von zwei seitlichen Flügeln (13) begrenzt ist, die durch einen Spalt (15) voneinander getrennt sind, der eine Weite aufweist, die kleiner ist als der Durchmesser des Seils, **dadurch gekennzeichnet, dass** an wenigstens einer Stelle des offene Durchlasses (14) der Durchmesser des offenen Durchlasses (14) kleiner ist als der Durchmesser des Seils und dass der Durchmesser des offenen Durchlasses (14) sich monoton verändert, so dass, wenn das Seil in den offenen Durchlass (14) eingesetzt ist, das Seil eingeklemmt ist.

2. Anordnung nach Anspruch 1, **dadurch gekennzeichnet, dass** die dritte Richtung (d3) mit der ersten Richtung (d1) einen Winkel von näherungsweise 180° einschließt.

3. Einrichtung nach einem der vorhergehenden Ansprüche, **dadurch gekennzeichnet, dass** sie ferner Befestigungsmittel (7) zur Verbindung mit einem Gegenstand aufweist.

4. Einrichtung nach Anspruch 3, **dadurch gekennzeichnet, dass** die Befestigungsmittel (7) einen Haken bilden.

5. Einrichtung nach einem der Ansprüche 1 bis 4, **dadurch gekennzeichnet, dass** die seitlichen Flügel (13) elastisch sind um das Einführen des Seils (6) in den Durchlass (14) zu erleichtern.

6. Einrichtung nach einem der vorhergehenden Ansprüche, **dadurch gekennzeichnet, dass** sie einstückig aus einem Teil hergestellt ist, vorzugsweise aus Kunststoffmaterial gespritzt ist.

7. Gepäcksicherungseinrichtung (20) zum Fixieren eines Gepäckstücks an einem Gepäckträger, mit einem Seil (6) und wenigstens einer Seilsicherungseinrichtung (1) nach einem der vorhergehenden Ansprüche, wobei die Seilsicherungseinrichtung (1) in der Nähe eines Endbereiches (6a) des Seils fixiert ist.

8. Gepäcksicherungseinrichtung nach Anspruch 7, **dadurch gekennzeichnet, dass** sie außerdem einen Seilendehalter (21) umfasst, der fest mit dem Endbereich (6a) des Seils (6) verbunden ist und der Rastmittel (25) umfasst, die dazu eingerichtet sind, lösbar an einem anderen Teil des Seils (6) verastbar zu sein.

9. Gepäcksicherungseinrichtung nach Anspruch 8, **dadurch gekennzeichnet, dass** die Rastmittel (25) zwei Rastlaschen (28) und eine Sackbohrung (24) enthalten, die dazu vorgesehen ist, den Seilendabschnitt (6a) aufzunehmen und festzuhalten, und dass die beiden Rastlaschen (28) dazu vorgesehen sind, einen anderen Teil des Seils (6) so zu umklammern, dass das Seil fest und lösbar eingeklemmt ist.

10. Gepäcksicherungseinrichtung nach Anspruch 8, **dadurch gekennzeichnet, dass** die Rastmittel (25) einen Rastarm (26) und eine Sackbohrung (24) umfassen, die dazu eingerichtet ist, einen Seilendabschnitt (6a) aufzunehmen und zu sichern, und dass der Rastarm (26) dazu eingerichtet, einen anderen Teil des Seils (6) so zu umklammern, dass das Seil fest und lösbar eingeklemmt ist.

11. Gepäcksicherungseinrichtung nach einem der Ansprüche 7 bis 10, **dadurch gekennzeichnet, dass** sie wenigstens zwei ähnliche Seile umfasst, die aneinander befestigt sind.

12. Gepäcksicherungseinrichtung nach einem der Ansprüche 7 bis 11, **dadurch gekennzeichnet, dass** das Seil (6) ein elastisches Seil ist, dessen Durchmesser sich vermindert, wenn das Seil entgegen einer durch das Seil ausgeübten elastischen Kraft in die Länge gezogen wird.
